# EUROPEAN PATENT APPLICATION

(11) **EP 4 592 847 A1**
(43) Date of publication of application: **30.07.2025**
(21) Application number: 25151230.7
(22) Date of filing: 10.01.2025
(51) Int. Cl.: G06F 11/07, G06F 11/14

(54) **DUAL TIMING CIRCUIT**

(30) Priority: 23.01.2024 US 202418420101
(71) Applicant: The Boeing Company, Arlington, VA 22202 (US)
(72) Inventor: PALAV, Utkarsh, Arlington, 22202 (US); RANJAN, Rajeev, Arlington, 22202 (US); SRINIVASA MURTHY, Jayaram B., Arlington, 22202 (US); ANDERSON, Van, Arlington, 22202 (US); DAME, Guy I., Arlington, 22202 (US)
(74) Representative: Bugnion S.p.A. - US1

(57) **Abstract**

A dual timing circuit configured to reset a processor upon detecting a fault. The dual timing circuit includes a start-up circuit configured with a first timeout duration. The start-up circuit is operative to assert a reset signal in response to failing to complete a boot load by the processor within the first timeout duration after powering on. The dual timing circuit further includes an operations circuit configured with a second timeout duration. The operations circuit is operative to assert the reset signal in response to failing to receive a strobe signal from the processor within the second timeout duration.

## Description

### TECHNOLOGICAL FIELD

The present disclosure relates generally to providing fault correction for computing systems. More specifically, the present disclosure relates to monitoring and correcting the start-up and runtime operations of processors and microcontrollers.

### BACKGROUND

In general, computing devices have processors susceptible to errors that may occur at any time during the start-up and use of the computing device. Some of these devices run applications that perform high-criticality or mission-critical functions. For example, computing devices that run applications for monitoring heavy machinery such as fleet vehicles or other computing devices require high-level safety certifications (i.e., Design Assurance Level (DAL) A or B certifications). These machines may use internal or external monitoring circuits to monitor the progression of device start-ups (or restarts) and software application runtimes to ensure that the processor performs without fault.

External monitoring circuits are preferred over internal solutions. In comparison to external solutions, internal monitoring circuits are less capable of reliably monitoring and correcting faults caused during the boot load process. Existing external solutions employ either a single-timing integrated circuit (IC) or a Field-Programmable Gate Array and/or Complex-Programmable Logic Device (FPGA/CPLD).

A single discrete IC can help to monitor either start-up (hardware) or runtime operations (software), but not both. Since both have considerably different timeout requirements, a single discrete IC would not suffice. Another problem is that the discrete IC is not capable of storing the reset source (i.e., the cause of failure) upon a failure in either start-up or during runtime. Moreover, discrete ICs come with discrete settable input pins for time out, so employing two units of the same discrete IC has two issues. The first issue is that these inputs need to be configured from the microcontroller/processor, and this implementation requires a high pin count dedicated for operation. The second issue is that this kind of implementation presents reliability issues.

Dual timing for start-up and runtime monitoring can be achieved using CPLD/FPGAs. However, CPLD/FPGAs fail to pass high safety-critical functionality requirements for some computing devices (e.g., heavy machinery such as fleet vehicles; Design Assurance Level A (DAL A)). This leads to conducting DAL A DO-178/DO-254 certification, increasing the design complexity and potentially leading to a longer product development cycle and higher qualification costs.

### SUMMARY

An aspect of the present disclosure provides a dual timing circuit configured to reset a processor upon detecting a fault. The dual timing circuit includes a start-up circuit configured with a first timeout duration. The start-up circuit is operative to assert a reset signal in response to failing to complete a boot load by the processor within the first timeout duration after powering on. The dual timing circuit further includes an operations circuit configured with a second timeout duration. The operations circuit is operative to assert the reset signal in response to failing to receive a strobe signal from the processor within the second timeout duration. According to some aspects of the present disclosure, the start-up circuit is hardware controlled. According to some aspects of the present disclosure, the operations circuit is software controlled.

According to some aspects of the present disclosure, the dual timing circuit is further configured to assert a single reset signal to the processor in response to either the start-up circuit or the operations circuit asserting the reset signal.

According to some aspects of the present disclosure, the dual timing circuit further includes a first memory element configured to store a reset indicator signal indicating the source of the reset signal asserted by the start-up circuit. The dual timing circuit further includes a second memory element configured to store the reset indicator signal indicating the source of the reset signal asserted by the operations circuit.

According to some aspects of the present disclosure, the processor is configured to disable the start-up circuit after the boot load is completed and the operations circuit is configured correctly. According to some aspects of the present disclosure, the strobe signal from the processor is shared by the operations circuit and the start-up circuit.

According to some aspects of the present disclosure, the dual timing circuit further includes a serial interface. The second timeout duration is configured over the serial interface.

According to some aspects of the present disclosure, the strobe signal is operatively connected to the operations circuit and the startup circuit.

Another aspect of the present disclosure provides a method for resetting a processor upon detecting a fault. The method includes asserting, by a start-up circuit configured with a first timeout duration, a reset signal in response to failing to complete a boot load by a processor within a first timeout duration. The method further includes asserting, by an operations circuit configured with a second timeout duration, the reset signal in response to failing to receive a strobe signal from the processor within a second timeout duration.

According to some aspects of the present disclosure, the method further includes disabling the start-up circuit in response to the boot load by the processor completing within a first timeout duration.

According to some aspects of the present disclosure, the method further includes enabling the operations circuit in response to the boot load by the processor completing within a first timeout duration.

According to some aspects of the present disclosure, the method further includes configuring the operations circuit in response to the boot load by the processor.

According to some aspects of the present disclosure, the method further includes, in response to failing to receive a strobe signal from a processor within a second timeout duration, writing a reset indicator signal indicating the source of the reset signal asserted by the operations circuit to a second memory element.

According to some aspects of the present disclosure, the method further includes, in response to failing to complete a boot load by a processor within a first timeout duration, writing a reset indicator signal, indicating the source of the reset signal asserted by the start-up circuit. According to some aspects of the present disclosure, the method further includes storing, by a first memory element, an indication of a reset signal asserted by the start-up circuit and storing, by a second memory element, an indication of a reset signal asserted by the operations circuit. According to some aspects of the present disclosure, the method further includes asserting a single reset signal to the processor in response to either start-up or asserting reset. According to some aspects of the present disclosure, the method further includes configuring the second timeout duration over a serial interface.

According to some aspects, the start-up circuit may be reconfigured with a longer time duration than the operations circuit. The start-up circuit may be used as a second layer of protection in case of failure of the operations circuit.

Another aspect of the present disclosure provides a method implemented by a dual timing circuit. The method includes asserting a reset signal to a processor responsive to one of a plurality of timers expiring before a boot load or runtime is complete. A first timer of the plurality of timers is configured to start upon boot load of a processor. A second timer of the plurality of timers is configured to start responsive to the boot load succeeding.

According to some aspects of the present disclosure, the method further includes writing to a first memory element an indication of the source of the reset signal asserted by a first circuit associated with the first timer and writing to a second memory element an indication of the source of the reset signal asserted by a second circuit associated with the second timer.

According to some aspects, the processor may read a first memory element and a second memory element after completing the boot load operation.

According to some aspects, the processor may clear a reset indicator signal stored at a first memory element and a second memory element.

According to some aspects, during a power on, a first memory element and a second memory element are cleared before the boot load by the processor.

According to some aspects, the processor can be reset if the power rails used for powering the processor are not in a nominal range.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is a block diagram of a dual timing circuit coupled to a processor according to one exemplary aspect of the present disclosure.
FIG. 2 is a timing diagram for the start-up circuit according to one exemplary aspect of the present disclosure.
FIG. 3 is a timing diagram for the operations circuit according to one exemplary aspect of the present disclosure.
FIG. 4 is a flow diagram of a method of facilitating autocorrection of temporary faults according to one exemplary aspect of the present disclosure.
FIG. 5 is a flow diagram of a method of facilitating autocorrection of temporary faults according to one exemplary aspect of the present disclosure.
FIG. 6 is a flow diagram of a method of facilitating autocorrection of temporary faults according to one exemplary aspect of the present disclosure.
FIG. 7 is a flow diagram of a method of facilitating autocorrection of temporary faults according to one exemplary aspect of the present disclosure.
FIG. 8 is a circuit diagram of the dual timing circuit according to one exemplary aspect of the present disclosure.
FIG. 9 is a flow diagram of a method of facilitating autocorrection of temporary faults according to one exemplary aspect of the present disclosure.

### DETAILED DESCRIPTION

The present disclosure provides a scalable dual timing circuit that may be used for applications up to the criticality of Design Assurance Level A, thereby discounting the need for DO-254 certification. The dual timing circuit provides enhanced reliability (due to a lower part count and the use of discrete ICs), a reduced design complexity as compared to an ASIC/FPGA approach, and the ability to store a reset source. The dual timing circuit provides a discrete-based implementation that allows the circuit to operate without programmable devices. For example, timing capacitors are not required for setting a timeout value. In addition, a reset time set is changed throughout the different phases of monitoring without any additional cost to the program.

The disclosed dual timing circuit has a wide range of applications since most computing devices are configurable to include an external circuit for monitoring, especially computing devices with higher criticality or impact of failure. Further, being flexible while still being a low-cost solution, the present disclosure can be easily adapted to support a variety of system timeout requirements, regardless of whether it is a single or multiple Central Processing Unit (CPU)-based architecture.

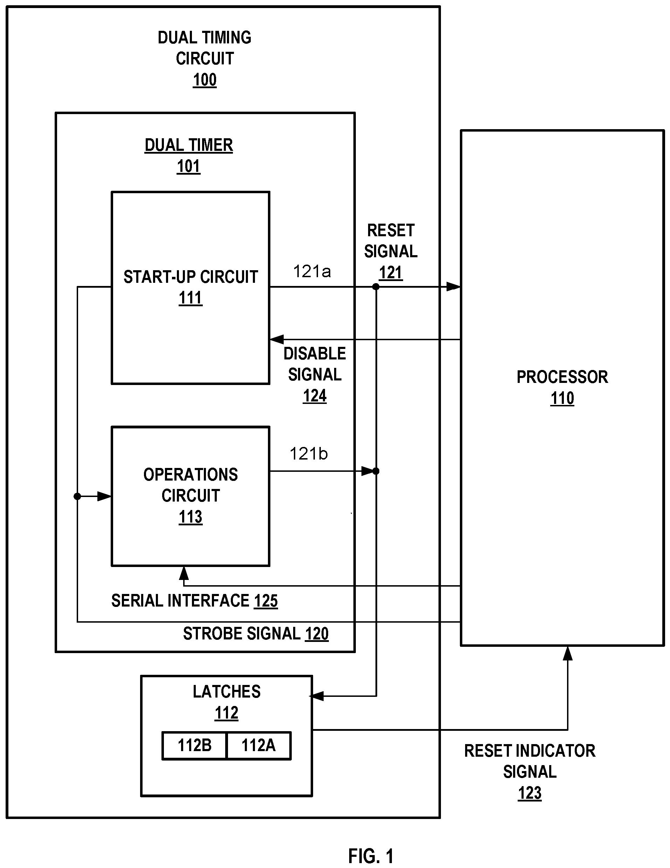

FIG. 1 is a block diagram of a dual timing circuit 100 coupled to a processor 110 according to one exemplary aspect. The dual timing circuit 100 includes a dual timer 101, and latches 112. The processor 110 is connected to an operations circuit 113 and a start-up circuit 111 (both located within the dual timer 101) by a strobe signal 120. The processor 110 is also communicatively coupled to the operations circuit 113 by a serial interface 125. The start-up circuit 111 and the operations circuit 113 are coupled to the processor 110 by a reset signal 121. The processor 110 is also coupled to latches 112 through a reset indicator signal 123. The reset indicator signal 123 may be received at latches 112 by the operations circuit 113 and/or the start-up circuit 111. The processor is coupled to the start-up circuit 111 by a disable signal 124.

The processor 110, for example, can be a microprocessor or microcontroller.

The start-up circuit 111 (for start-up sequence monitoring) is primarily hardware-controlled and configured at power-up with the ability to be disabled by software (if required) once the start-up process is successfully completed. The start-up circuit 111 may provide start-up timeout monitoring support in case of start-up failures without any dependency on software. Since no software is required, a wide range of timeout values can be chosen as a start-up time through means of pull-up/pull-down resistor configurations. The start-up time, for example, may be set to ten seconds. The start-up timer is configured to count down to zero.

The operations circuit 113 (for software runtime monitoring) is primarily software controlled. An operations timer for the operations circuit 113 may be configured upon successful completion of a start-up. The operations timer is configured to count down to zero. The operations circuit 113 configuration (i.e., setting) may be implemented over a serial interface 125, which protects single-event bit flips, which could potentially lead to an incorrect timeout setting and hamper system functionality. The operations circuit 113 also fulfills a higher resolution timeout requirement (as compared to the start-up circuit) for runtime monitoring. For example, the operations timer may be set to ten milliseconds as compared to a ten second start-up timer. The start-up circuit 111 and operations circuit 113 can be operated together or one at a time, depending on the application requirement, hence providing redundant and robust monitoring for critical applications. The dual timing circuit 100 provides additional reliability and safety during operation due to the built-in redundancy. Moreover, unlike previous circuit architectures, since the start-up circuit 111 is predominantly hardware-controlled, there is no dependency on software to enable hardware functions.

The strobe signal 120 is a common strobe shared by the operations circuit 113 and the start-up circuit 111. The processor 110 is configured to send a strobe signal 120 (or keep-alive signal) to the dual timer 101 to restart a start-up or operations timer. Receiving the strobe signal 120 indicates that the processor 110 is operating normally. On the contrary, it is assumed that the processor 110 is not functioning properly if the strobe signal 120 is not received. The strobe signal 120 is initiated only after the dual timer 101 is fully configured. Having a common strobe signal 120 gives the flexibility to operate both timers in conjunction or to disable one. This feature also lends redundancy to the architecture.

The serial interface 125 coupled to the operations circuit 113 is used to configure the operations timer 113. The serial interface 125 configuration helps lower the processor/controller burden as it requires a one-time setup. The serial interface 125 also helps implement changing timeout requirements with ease, a common scenario during the development phase.

The latches 112 are single-bit memory latches. The latches 112 include a start-up latch 112A and an operations latch 112B. A latch includes a simple digital circuit where the output can be set to either logic 1 or logic 0 by an input signal. The latches 112 store the received signal state even after the input is removed. The latches receive a reset indicator signal 123 from either the start-up circuit 111 or the operations circuit 113. The reset indicator signal 123 is a signal indicating the source of the reset (i.e., failure) to the latches 112. The latches 112 log which (if at all) of the start-up circuit 111 or the operations circuit 113 was the source of reset. The purpose of latches 112 is to store the reset source for later debugging of the processor 110 or logging. The processor 110 may perform a memory reset to clear the reset indicator signal 123 stored at latches 112. The memory reset is performed so that a new reset indicator signal 123 can be stored at the latches 112.

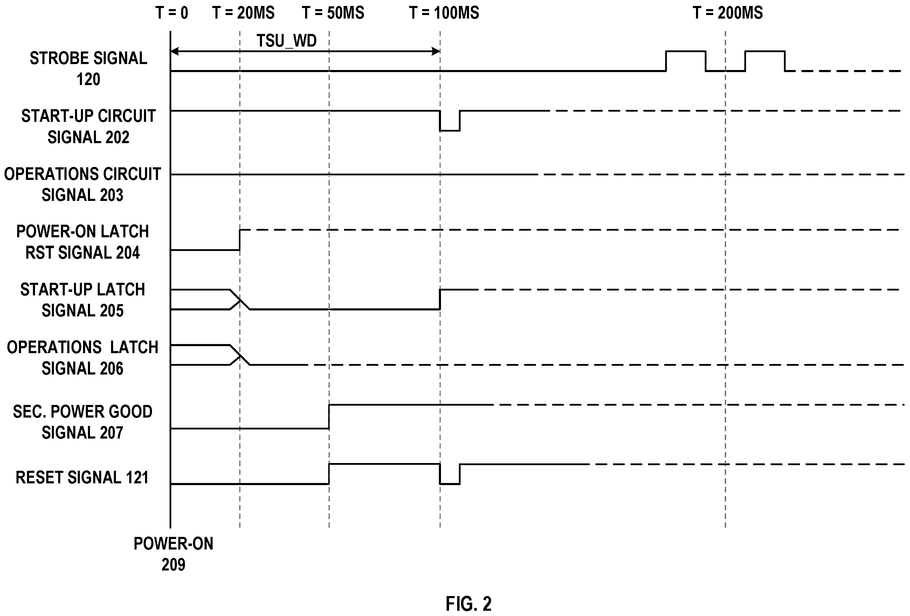

FIG. 2 is a timing diagram for the start-up circuit 111 according to one exemplary aspect. During power-on 209 at time T=0ms, the single-bit memory latches 112, including the start-up latch signal 205 and the operations latch signal 206, are in an unknown state. At T=20ms, the power-on latch reset (RST) signal 204, brings the start-up latch signal 205 and operations latch signal 206 outputs into logic LOW state. At T=50ms, a reset signal 121 and secondary power good signal 207 are set to logic HIGH when all the circuit power rails come within regulation. The secondary power good signal 207 is configured to keep the processor 110 in reset until the power rails stabilize. At T=100ms, the start-up circuit signal 202 is set to LOW. In the event the start-up sequence fails (i.e., the dual timer 101 does not receive a strobe signal 120, before the start-up timer reaches zero), the start-up circuit 111 asserts a reset signal 121, and the start-up latch signal 205 is set to logic HIGH. Once the start-up is successfully completed, the operations timer is configured by application software via serial interface 125.

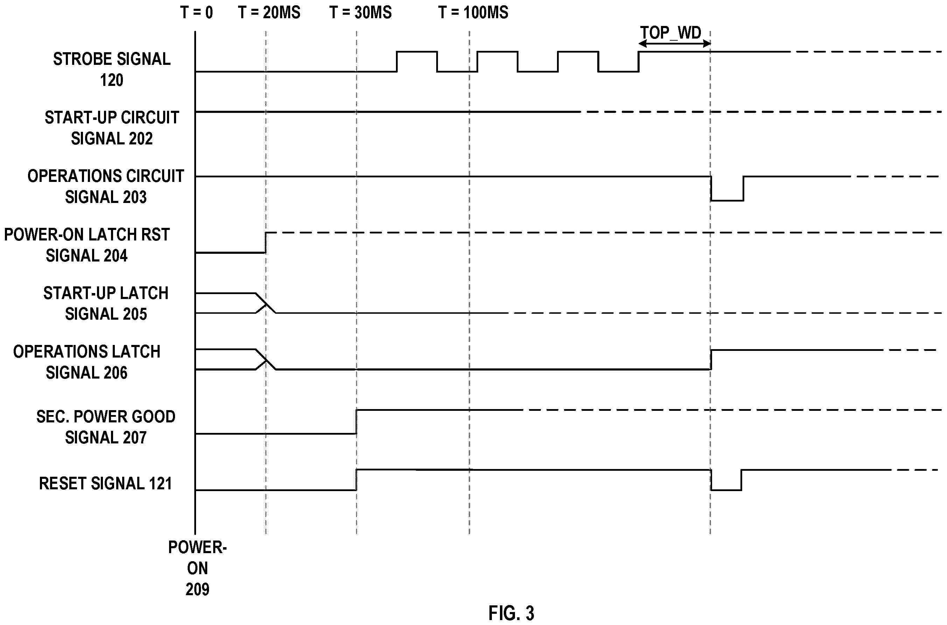

FIG. 3 is a timing diagram for the operations circuit 113 according to one exemplary aspect. At time T=0, the start-up latch signal 205 and the operations latch signal 206, are reset to an unknown state. Once the operations circuit 113 is programmed (the start-up timer enabled and configured for, e.g., timeout=10ms), the operations circuit 113 begins to monitor the strobe signal 120 for HIGH to LOW transitions.

If no transitions are observed before the operations timer reaches zero, a reset signal 121 is initiated by the operations circuit 113. A LOW pulse from the operations circuit signal 203 triggers and sets its operations latch signal 206 output to logic HIGH. Upon a reset, the processor 110 can read the states of the start-up latch 112A, and the operations latch 112B through reset indicator signal 123 to identify the source of the reset. After determining the source of the reset, the processor 110 can reset the latches 112 (operations latch 112B, start-up latch 112A) to logic LOW.

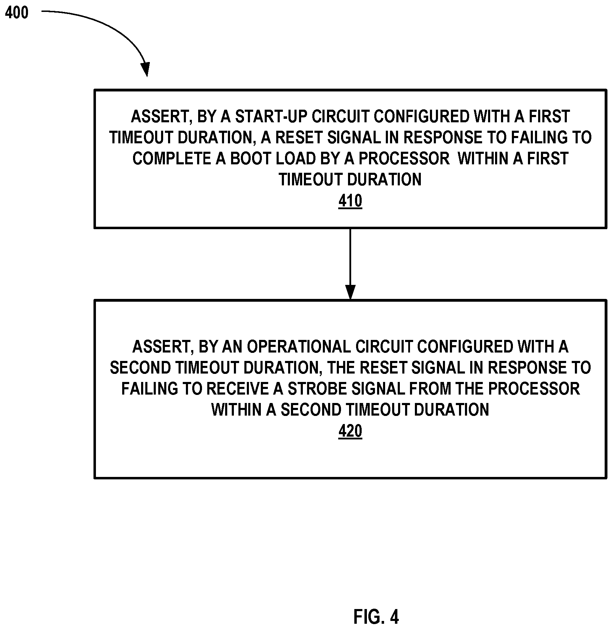

Figure 4 illustrates a flow chart for a method for resetting a processor upon detecting a fault. The method is indicated with reference number 400. The method includes asserting, by a start-up circuit 111 configured with a first timeout duration, a reset signal 121 in response to failing to complete a boot load by a processor 110 within a first timeout duration (410). The method further includes asserting, by an operations circuit 113 configured with a second timeout duration, the reset signal 121 in response to failing to receive a strobe signal 120 from the processor 110 within a second timeout duration (420). The first timeout duration may be a start-up timer. The second timeout duration may be an operations timer.

In some examples, the method includes disabling the start-up circuit 111 in response to the boot load by the processor 110 completing within a first timeout duration.

In some examples, the method includes enabling the operations circuit 113 in response to the boot load by the processor 110 completing within a first timeout duration. Enabling the operations circuit 113 may also include configuring the operations circuit 113.

In some examples, the method includes configuring the operations circuit 113 in response to the boot load by the processor 110. The configuring of the operations circuit 113 is performed after the boot load is completed and the operations circuit 113 is configured correctly.

In some examples, the method includes, in response to failing to receive a strobe signal 120 from the processor 110 within the second timeout duration, writing a reset indicator signal 123 indicating the source of the reset signal asserted by the operations circuit 113 to a second memory element. The second memory element may be the operations latch 112B.

In some examples, the method includes, in response to failing to complete a boot load by the processor 110 within the first timeout duration, writing a reset indicator signal 123, indicating the source of the reset signal 121 asserted by the operations circuit 113, to a first memory element. The first memory element may be the start-up latch 112A.

In some examples, the method includes storing, by a first memory element, an indication of the reset signal 121 asserted by the start-up circuit 111 and storing, by a second memory element, an indication of the reset signal 121 asserted by the operations circuit 113.

In some examples, the method includes asserting a single reset signal to the processor in response to either start-up circuit 111 or operations circuit 113 asserting a reset signal 121.

In some examples, the method includes configuring the second timeout duration over a serial interface.

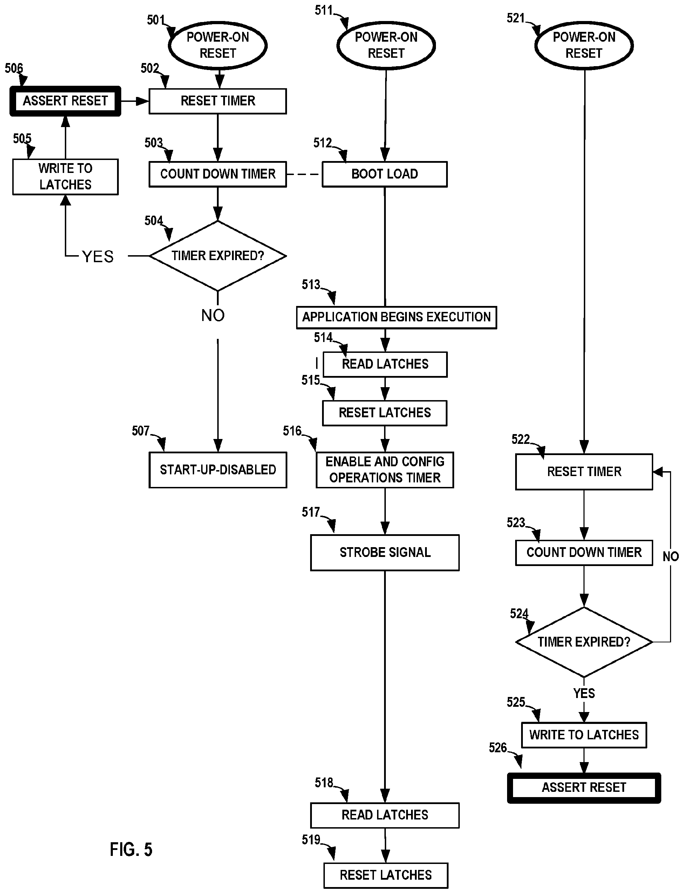

Now turning to Figure 5 illustrating a flow diagram of a method to monitor and power-on reset a processor when a hardware or software fault is detected, according to aspects of the present disclosure.

The process begins with a power-on reset 501, 511, and 521 of the start-up circuit 111, processor 110, and operations circuit 113, respectively. When a power-on reset 501 is initiated at the start-up circuit 111, the hardwired (hardware) start-up circuit 111 is activated, and the start-up timer is reset 502. The start-up circuit 111 starts a count down 503, according to a configured countdown time. For example, the start-up timer may be configured for five seconds. At the processor 110, a boot load sequence 512 (System Controller Unit [SCU] boot load) is then started.

As the boot load 512 is in process, the start-up timer is configured to simultaneously count down. A boot load error is indicated if the boot load 512 is not completed before the start-up timer expires (ends). If the boot load error occurs, the start-up circuit 111 writes 505 the source of the error to the start-up latch 112A and asserts a reset signal 506 to the processor 110. The processor 110 restarts a power-on reset 511 once the signal is received at the processor 110. A boot load is successfully completed if the boot load 512 sequence ends before the start-up circuit 111 expires. Upon a completed boot load, a software application begins execution 513, the latches 112 are read 514 by the processor 110. The latches are then reset 515. In another aspect, reading the latches 514 should only be done after initiating the strobe signal 120. In another aspect, the reading of the latches should only be done before initiating the strobe signal 120.

The processor enables and configures 516, the operations circuit 113 to reset the operations timer 522. If operations circuit 113 is configured incorrectly and the process repeats at 501, 511, and 521 at power-on reset. The start-up circuit 111 is activated automatically upon any power-on reset 501, 511, 521. The operations circuit 113 is disabled automatically upon any power-on reset taking place.

Upon successfully enabling and configuring 516 the operations timer, processor 110 disables 507 the start-up circuit 111. Additionally, or alternatively, the processor 110 may disable 507 the start-up circuit 111 from being operational through three discrete general-purpose input/output (GPIOs), holding the start-up circuit 111 in a disabled configuration. Additionally, or alternatively, the start-up circuit 111 has a connection via a dual in-line package (DIP) switch to disable the start-up circuit 111.

Upon successfully enabling and configuring 516 the operations circuit 113, the processor 110 outputs strobe signals 517 (i.e., keep-alive signals) to the operations circuit 113 indicating that the applications are operating normally. Additionally, or alternatively, strobe signaling 517 may be initiated before sending a disable 507 to the start-up circuit 111. In another aspect, the strobe signaling 517 may be initiated only after the operations circuit 113 is fully configured.

So long as the strobe signals 120 are received at operations circuit 113 before the operations timer has expired 524, the application is assumed to be running normally. If a strobe signal 120 is not received before the operations timer has expired 524, it is determined that the application runtime is at fault. In response to a detected fault, the operations circuit 113 writes 525 the source of the error to latch 112B and asserts a reset signal 526 to the processor 110. The processor 110 reads the latches 518 and resets 519 the latches 112. The processor 110 then performs another power-on reset 501, 511, 521.

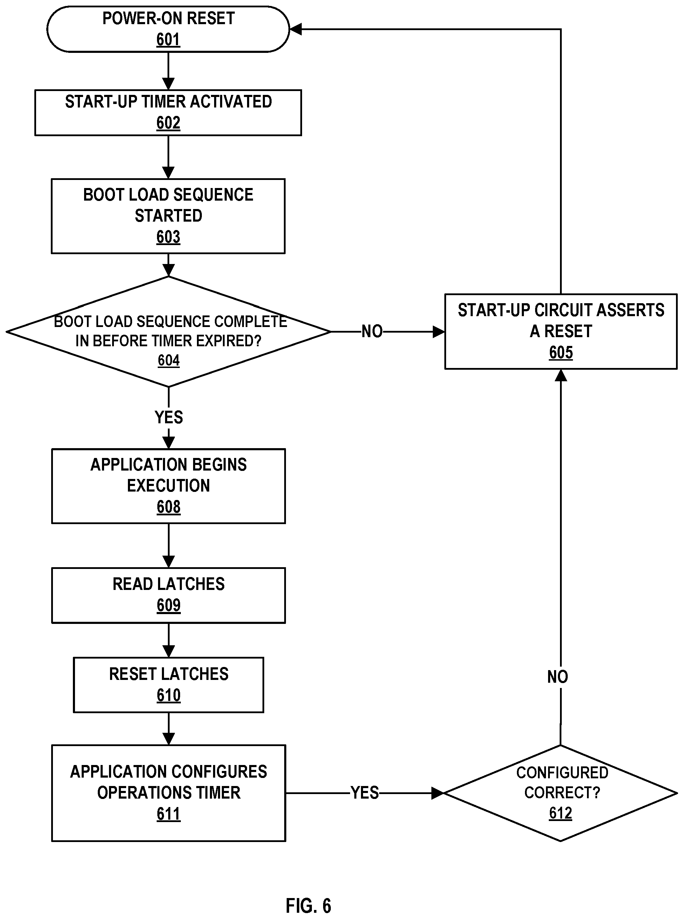

Figure 6 illustrates a flow diagram of a method to monitor and power-on reset a processor 110 when a hardware fault is detected, according to aspects of the present disclosure.

At power-on reset 601, start-up timer is activated 602. The processor 110 starts a boot load sequence 603. If the boot load sequence is complete in a timeframe before the timer expires 604, the processor 110 executes the software application 608. The processor 110 reads 609 the latches 112, and resets 610 the latches 112. The processor 110 then configures 611, the operations timer. If the operations timer is not configured before the start-up timer expires, the start-up circuit 111 writes the source of the reset to the latches 112 (i.e., the operations circuit 113) and asserts a reset 605. Configuring the operations circuit 113 may include enabling and setting the operations timer. The operations circuit is presumed to have been successfully configured 612 if a strobe signal 120 is received at the operations circuit 113. If the strobe signal 120 is not received, the start-up circuit asserts a reset 605.

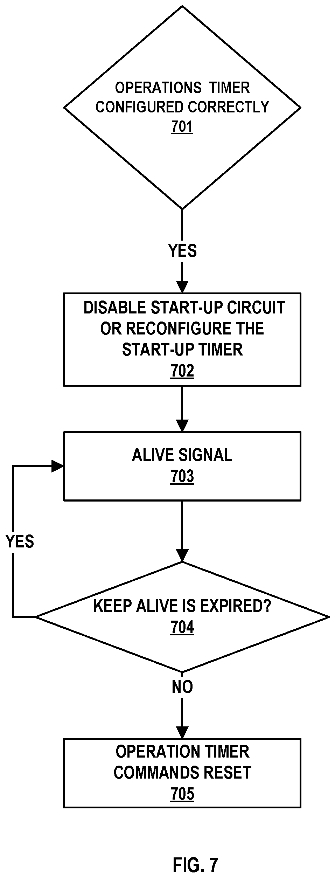

Figure 7 illustrates a flow diagram of a method to monitor and power reset a processor 110 when a software fault is detected, according to aspects of the present disclosure.

When the operations timer is configured correctly 701, the processor 110 may either disable 702 or reconfigure the start-up timer. The processor 110 will then send a keep-alive or strobe signal 703 to the operations circuit 113, indicating that an application runtime is operational. If the operations timer expires before receiving a keep-alive signal 704, the operations circuit 113 writes the source of the reset to the latches 112 and asserts a reset command 705 to the processor 110.

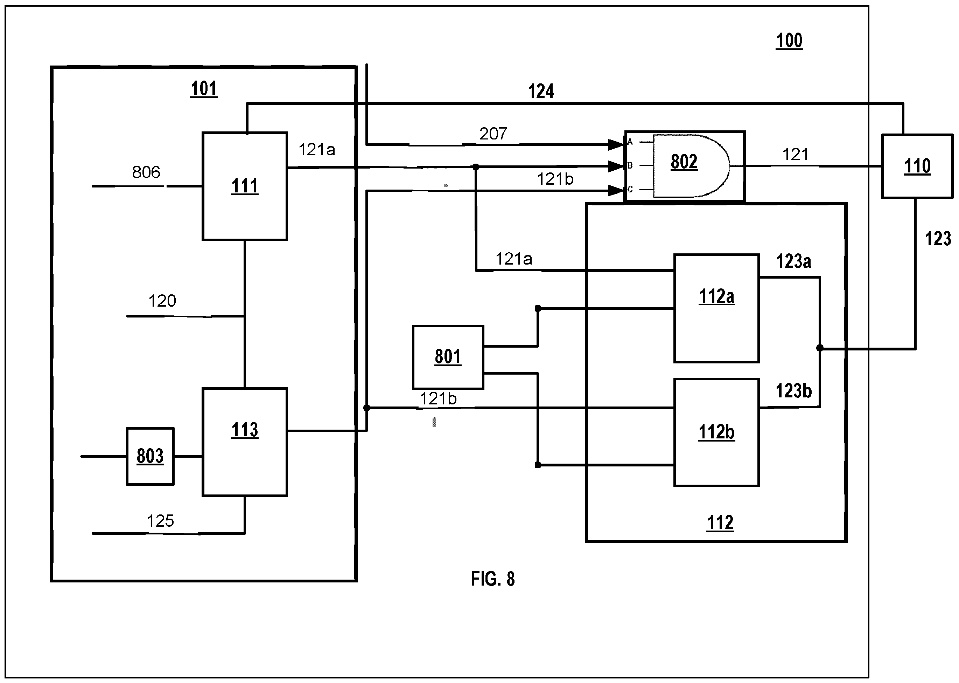

Figure 8 is a circuit diagram of the dual timing circuit 100 according to one exemplary aspect. The circuit includes a processor 110, an external dual timer 101, latches 112, and power-on latch reset 801.

The processor 110 is connected to the operations circuit 113 and a start-up circuit 111 (both located within the dual timer 101) by a strobe signal 120. The processor 110 is also communicatively coupled to the operations circuit 113 by a serial interface 125. The start-up circuit 111 and the operations circuit 113 are coupled to the processor 110 by a reset signal 121. The processor 110 is also coupled to latches 112 through a reset indicator signal 123. The reset indicator signal 123 may be received at latches 112 by the operations circuit 113 and/or the start-up circuit 111.

The processor 110 is configured to disable the start-up circuit 111 using a disable signal 124.

In some examples, the operations timer may be configured by the processor using GPIOs 806. In some examples, the operations circuit 113 may be enabled or disabled by an external enable disable circuit 803.

In some examples, an AND logic 802 is used to combine the secondary power good signal 207, a start-up reset signal 121a, and an operations reset signal 121b to output reset signal 121 to the processor 110.

In some examples, a start-up reset indicator signal 123a and an operations reset indicator signal 123b are coupled to the processor 110.

In some examples, the power-on latch reset 801 is coupled to the latches 112. The power-on latch reset 801 is configured to reset the start-up latch 112A and the operations latch 112B.

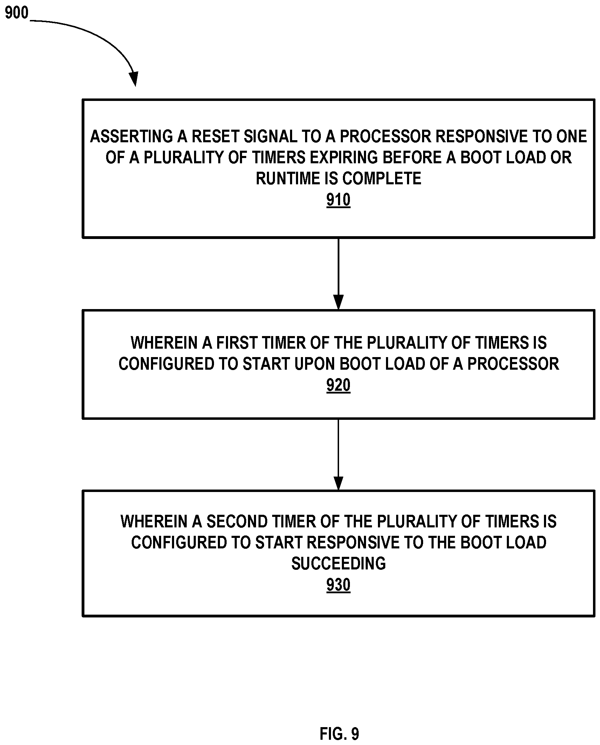

Figure 9 illustrates a flow chart for a method for resetting a processor 110 upon detecting a fault, according to aspects of the present disclosure. The method is indicated with reference number 900. The method includes asserting a reset signal 121 to a processor 110 responsive to one of a plurality of timers 111, 113 expiring before a boot load or runtime is complete (910). A first timer 111 of the plurality of timers is configured to start upon the boot load of a processor 110 (920). A second timer 113 of the plurality of timers is configured to start responsive to the boot load succeeding (930).

In some examples, the method includes writing to a first memory element 112A, an indication of the source of the reset signal 121 asserted by a first circuit 111 associated with the first timer 111 and writing, to a second memory element 112B, an indication of the source of the reset signal 121 asserted by a second circuit 113 associated with the second timer 113.

The present disclosure may, of course, be carried out in other ways than those specifically set forth herein without departing from essential characteristics of the disclosure. The present embodiments are to be considered in all respects as illustrative and not restrictive, and all changes coming within the meaning and equivalency range of the appended claims are intended to be embraced therein.

Further examples and combinations thereof include the following:
Clause 1. A dual timing circuit (100) configured to reset a processor (110) upon detecting a fault, the dual timing circuit comprising:
   a start-up circuit (111) configured with a first timeout duration, wherein the start-up circuit (111) is operative to assert a reset signal (121) in response to failing to complete a boot load by the processor (110) within the first timeout duration after powering on; and
   an operations circuit (113), configured with a second timeout duration, wherein the operations circuit (113) is operative to assert the reset signal (121) in response to failing to receive a strobe signal (120) from the processor (110) within the second timeout duration.
Clause 2. The dual timing circuit (100) of Clause 1, wherein the start-up circuit (111) is hardware controlled.
Clause 3. The dual timing circuit (100) of Clause 1, wherein the operations circuit (113) is software controlled.
Clause 4. The dual timing circuit (100) of Clause 1, further configured to assert a single reset signal (121) to the processor (110) in response to either the start-up circuit (111) or the operations circuit (113) asserting the reset signal (121).
Clause 5. The dual timing circuit (100) of Clause 1, further comprising:
   a first memory element (112A) configured to store a reset indicator signal (123) indicating the source of the reset signal (121) asserted by the start-up circuit (111); and
   a second memory element (112B) configured to store the reset indicator signal (123) indicating the source of the reset signal (121) asserted by the operations circuit (113).
Clause 6. The dual timing circuit (100) of Clause 1, wherein the processor (110) is configured to disable the start-up circuit (111) after the boot load is completed and the operations circuit (113) is configured correctly.
Clause 7. The dual timing circuit (100) of Clause 1, wherein the strobe signal (120) from the processor (110) is shared by the operations circuit (113) and the start-up circuit (111).
Clause 8. The dual timing circuit (100) of Clause 1, further comprising a serial interface (125), wherein the second timeout duration is configured to be set via the serial interface (125).
Clause 9. The dual timing circuit (100) of Clause 1, wherein the strobe signal (120) is configured to be operatively provided to both the operations circuit (113) and the startup circuit (111)
Clause 10. A method for resetting a processor (110) upon detecting a fault, the method comprising:
   asserting, by a start-up circuit (111) configured with a first timeout duration, a reset signal (121) in response to failing to complete a boot load by a processor (110) within a first timeout duration; and
   asserting, by an operations circuit (113) configured with a second timeout duration, the reset signal (121) in response to failing to receive a strobe signal (120) from the processor (110) within a second timeout duration.
Clause 11. The method of Clause 10, further comprising disabling the start-up circuit (111) in response to the boot load by the processor (110) completing within a first timeout duration.
Clause 12. The method of Clause 10, further comprising enabling the operations circuit (113) in response to the boot load by the processor (110) completing within a first timeout duration.
Clause 13. The method of Clause 10, further comprising configuring the operations circuit (113) in response to the boot load by the processor (110).
Clause 14. The method of Clause 10, further comprising, in response to failing to receive a strobe signal (120) from the processor (110) within a second timeout duration, writing a reset indicator signal (123) indicating the source of the reset signal (121) asserted by the operations circuit (113) to a second memory element (112B).
Clause 15. The method of Clause 10, further comprising, in response to failing to complete a boot load by a processor (110) within a first timeout duration, writing a reset indicator signal (123) indicating the source of the reset signal (121) asserted by the start-up circuit (111)
Clause 16. The method of Clause 10, further comprising:
   storing, by a first memory element (112A), an indication of a reset signal (121) asserted by the start-up circuit (111); and
   storing, by a second memory element (112B), an indication of a reset signal (121) asserted by the operations circuit (113).
Clause 17. The method of Clause 10, further comprising asserting a single reset signal (121) to the processor (110) in response to either the start-up circuit (111) or the operations circuit (113) asserting reset.
Clause 18. The method of Clause 10, further comprising configuring the second timeout duration over a serial interface.
Clause 19. A method, implemented by a dual timing circuit, the method comprising:
   asserting a reset signal (121) to a processor (110) responsive to one of a plurality of timers expiring before a boot load or runtime is complete;
   wherein a first timer of the plurality of timers is configured to start upon boot load of a processor (110); and
   wherein a second timer of the plurality of timers is configured to start responsive to the boot load succeeding.
Clause 20. The method of Clause 19, further comprising:
   writing to a first memory element (112A), an indication of the source of the reset signal (121) asserted by a first circuit (111) associated with the first timer; and
   writing, to a second memory element (112B), an indication of the source of the reset signal (121) asserted by a second circuit (113) associated with the second timer.

## Claims

1. A dual timing circuit (100) configured to reset a processor (110) upon detecting a fault, the dual timing circuit comprising:
a start-up circuit (111) configured with a first timeout duration, wherein the start-up circuit (111) is operative to assert a reset signal (121) in response to failing to complete a boot load by the processor (110) within the first timeout duration after powering on; and
an operations circuit (113), configured with a second timeout duration, wherein the operations circuit (113) is operative to assert the reset signal (121) in response to failing to receive a strobe signal (120) from the processor (110) within the second timeout duration.

2. The dual timing circuit (100) of claim 1, wherein the start-up circuit (111) is hardware controlled.

3. The dual timing circuit (100) of claim 1 or 2, wherein the operations circuit (113) is software controlled.

4. The dual timing circuit (100) of any one of the preceding claims, further configured to assert a single reset signal (121) to the processor (110) in response to either the start-up circuit (111) or the operations circuit (113) asserting the reset signal (121).

5. The dual timing circuit (100) of any one of the preceding claims, further comprising:
a first memory element (112A) configured to store a reset indicator signal (123) indicating the source of the reset signal (121) asserted by the start-up circuit (111); and
a second memory element (112B) configured to store the reset indicator signal (123) indicating the source of the reset signal (121) asserted by the operations circuit (113).

6. The dual timing circuit (100) of any one of the preceding claims, further comprising a serial interface (125), wherein the second timeout duration is configured to be set via the serial interface (125).

7. The dual timing circuit (100) of any one of the preceding claims, wherein the strobe signal (120) is configured to be operatively provided to both the operations circuit (113) and the startup circuit (111).

8. A method (400) for resetting a processor upon detecting a fault, the method (400) comprising:
asserting (410), by a start-up circuit configured with a first timeout duration, a reset signal in response to failing to complete a boot load by a processor within a first timeout duration; and
asserting (420), by an operations circuit configured with a second timeout duration, the reset signal in response to failing to receive a strobe signal from the processor within a second timeout duration.

9. The method (400) of claim 8, further comprising disabling the start-up circuit (111) in response to the boot load by the processor (110) completing within a first timeout duration.

10. The method (400) of claim 8, further comprising enabling the operations circuit (113) in response to the boot load by the processor (110) completing within a first timeout duration.

11. The method (400) of any one of claims 8 to 10, further comprising configuring the operations circuit (113) in response to the boot load by the processor (110).

12. The method (400) of any one of claims 8 to 11, further comprising, in response to failing to receive a strobe signal (120) from the processor (110) within a second timeout duration, writing a reset indicator signal (123) indicating the source of the reset signal (121) asserted by the operations circuit (113) to a second memory element (112B).

13. The method of any one of claims 8 to 12, further comprising, in response to failing to complete a boot load by the processor (110) within a first timeout duration, writing a reset indicator signal (123) indicating the source of the reset signal (121) asserted by the start-up circuit (111).

14. The method (400) of any one of claims 8 to 13, further comprising:
storing, by a first memory element (112A), an indication of a reset signal (121) asserted by the start-up circuit (111); and
storing, by a second memory element (112B), an indication of a reset signal (121) asserted by the operations circuit (113).

15. The method of any one of claims 8 to 14, further comprising asserting a single reset signal (121) to the processor (110) in response to either the start-up circuit (111) or the operations circuit (113) asserting reset.
